# EUROPEAN PATENT APPLICATION

(11) **EP 3 115 252 A1**
(43) Date of publication of application: **11.01.2017**
(21) Application number: 16178306.3
(22) Date of filing: 07.07.2016
(51) Int. Cl.: B60L 11/18, H01R 13/62, H01R 13/44, B62H 3/00

(54) **ANCHORING SYSTEM FOR ELECTRIC BICYCLES, PORT FOR PLACING BICYCLES, ELECTRIC BICYCLE AND STATION FOR PLACING BICYCLES**

(30) Priority: 08.07.2015 ES 201530981
(71) Applicant: Clear Channel Espana S.L.U., 28033 Madrid (ES)
(72) Inventor: MUNTANER RIERA, Pedro, 28033 Madrid (ES)
(74) Representative: Iglesias Monravá, José Mª

(57) **Abstract**

Anchoring system for electric bicycles comprising at least one an electric battery, wherein said anchoring system comprises at least one support (2) prepared for attaching it to the electric bicycle, a current conductor bolt (4) prepared to apply to it at least an electrical voltage and to be electrically connected to the battery of the electric bicycle (7), transmitting the voltage applied to the bolt (4) to the battery and a device (9), which projects totally or partially said bolt (4), and that is ready to swing and align said bolt (4) with a port (15) for placing bicycles according to the invention wherein said bolt (4) is inserted.

## Description

### Technical Field

The present invention relates to an anchoring system for electric bicycles, a port for placing bicycles, an electric bicycle and a station for placing and recharging electric bicycles.

The application scope of the present invention is the electric bicycle as means for transportation and systems parking it. Regarding the latter scope, specifically, those that are integrated into the same electric bicycle and/or which are incorporated in stations prepared to parking electric bicycles, preferably those that offer a public service to the user consisting in rental of electric bicycles for temporary periods would also be included.

### Prior Art

For some years it is very common that most cities offer a public bicycle service in which the user can borrow, from a specific station in which there are parked several bicycles, one of them for a period of time, and he/she must return it at the same or at another station before the expiry of said period.

On the other hand, in recent years it has also proliferated greatly the use of electric bicycles to move around the cities, so that it has become a necessity parking them in the streets. They have also appeared in major cities public services for renting electric bicycles similar to those for traditional bicycles.

Therefore, it has become a necessity for the citizens of these cities have electric bicycles that can be prepared to pick up the bicycles from parking stations and to deposit them in the aforementioned stations once the service is ended.

In this sense, there is a document in the prior art that solves the technical problem of electric bicycle parking, preferably bicycle stations, which is ES2371402.

This document discloses an automatic parking system for electric bicycles, wherein the parking of the electric bicycle and the recharge of its electric battery is done through a port placed on the front wheel and a station ready to pick up said port. Specifically, the bicycle port mainly comprises two terminal ends and two cables suitable for electrically linking it to the electric battery of the electric bicycle, so that one of them is the positive pole and the other is the negative pole. Meanwhile, the station to park the bicycle comprises two symmetrical blocks with a space to collect the frontal wheel of the electric bicycle prepared to pick up each one of the terminal ends of the port of electric bicycle, and further comprising a terminal to make electrical contact with the bicycle port through which the electric battery recharges. Furthermore, said symmetrical blocks each include one automatic fasteners that are activated by a motorized lock system when the frontal wheel is introduced into said blocks so that it is anchored to the port.

The main drawback of this parking system is that for anchoring the electric bicycle by the frontal wheel each block must have an electric motor to rotate each of the automatic locks to the anchoring position. This means that if one engine fails, the system would not work or would not work properly.

Also it involves an inefficient rationalization of space, since each electric bicycle requires two symmetrical blocks, one for each end of the bicycle port, spaced to each other.

### Disclosure of the invention

The present invention primarily aims to solve the technical problem of parking electric bicycles in the street and take advantage of parking time to recharge the electric battery. Furthermore, this invention aims to overcome all cited drawbacks.

To this end, an anchoring system for electric bicycles and a port for placing bicycles that are elevated in height so that the user can park the bicycle easily lifting minimally or even not lifting it at all are defined. Preferably, the anchoring system must be located in an area close to the handlebar and the port for placing bicycles at the bicycle parking station should be located at a similar height or slightly higher than the handlebar.

The anchoring system according to the invention comprises at least one support prepared for attaching said anchoring system to the electric bicycle, a bolt, preferably current conductor, and preferably made from metal and prepared to be inserted into the port to place bicycles and a device, from which said bolt projects totally or partially, and that is ready to swing and to align said bolt with the port to place bicycles in which said bolt is inserted. Preferably, the device is attached to the support by any attachment means known in the prior art.

Specifically, this support that is ready to be joined to an electric bicycle is arranged such it permits to place the anchoring system in the frontal part of the electric bicycle, preferably the handlebar and/or the frame of the electric bicycle.

Preferably, the anchoring system according to the invention comprises a support and a device from which projects at least two bolts.

Preferably, the bolts are formed by two distinct sections, all made from conductive material, and preferably metal, of which the lower section has a spherical shape and the upper section has an inverted cone shape, so that the width of the lower section is greater than the upper section. Specifically, in the port to place bicycles the entire lower section and a portion of the upper section of the anchoring system must be inserted.

As mentioned above, one of the objectives of the present invention is to use the parking time of the electric bicycle at the port for parking electric bicycles to recharge its battery so when the anchoring system has been inserted in that port, said port must be able to apply voltage enough to recharge the battery of the electric bicycle.

To do this, the port for placing bicycles generates at least one voltage which is transferred to at least one bolt of the anchoring system, preferably by contact, and it transmits it to the battery. In other preferred embodiments, the voltage difference to be applied at the terminals of the battery that is enough to recharge the battery itself is achieved through the voltage difference between said voltage from a bolt which is applied to one terminal of the battery and a fixed voltage or a voltage from another bolt that has been transferred to it by contact to with the port for placing bicycles, applied either of the latter two to the other terminal of the battery.

In the embodiment of an anchoring system comprising a support with a device from which two bolts project, preferably, the voltage difference to be applied to the terminals of the battery of the electric bicycle to recharge is obtained from the port to place bicycles, that applies two different voltages, whose difference is the necessary to recharge the battery, which are transferred by contact, each to a bolt and each transmits it, through electrical connectors, to one of the terminals of the electric battery.

In another preferred embodiment, as a security measure, the anchoring system further comprises an electronic device, preferably a diode, prepared to allow the passage of current from the bolts to the battery, but preventing the passage of current in the opposite direction, protecting the bolts from possible short-circuits. In this way, the user is protected from a discharge of the battery through the bolts. Preferably, said electronic device will allow the passage of current and, consequently, the transmission of the potential from a particular potential difference, which must be enough to recharge the battery.

In a preferred embodiment, to prevent any liquid or material to enter the port for placing bicycles or contact the bolt when it has been inserted into the port for placing bicycles, the anchoring system further comprises an umbrella device ready to plug the perimeter of the entrance of the port for placing bicycles through which the anchoring system is inserted. Preferably, the umbrella device is located at the top of the upper section of the bolt and it has a frustoconical shape in which the part with smaller radius is located further from the lower section of the bolt.

As mentioned above, the port for placing bicycles is designed so that part of the anchoring system is inserted therein and through a established voltage in said port for placing bicycles the battery of the electric bicycle is recharged.

For this, the port for placing bicycles comprises at least one element, preferably of cylindrical shape, communicating with the outside through a hole prepared to insert at least one bolt of the anchoring system and in which the end opposite to said hole is ready to collect part of at least said bolt. This element further comprises, in the area prepared to collect part of at least one bolt, at least one charging terminal that is energized with a voltage which is transferred to the bolt, and it transmits it to the battery of the electric bicycle, being established in said battery a voltage enough for its recharging. Said element may be blind or include at least one small hole, so that in the case that water or other liquid is introduced through it, it can be drained through said small hole.

Preferably, as a safety measure, the port for placing bicycles further comprises a switch device, for example a relay, which allows the passage of current to the charging terminal when the battery must be recharged.

Preferably, as discussed above, the voltage established in the charging terminals must be such that the voltage difference applied to the battery terminals is enough to recharge it.

In a preferred embodiment, the port for placing bicycles comprises two elements which communicate with the outside through a hole prepared to insert a bolt of the anchoring system and wherein the end opposite to said hole is ready to collect part of at least that bolt, so that when a bolt is inserted into each hole and comes into contact with the respective charging terminals, a voltage difference is set in said charging terminals enough to recharge battery of the electric bicycle, which is transferred to the terminals of the battery through said bolts and electrical connectors that connect each bolt to each battery terminal.

In a preferred embodiment, said element prepared to collect a bolt further comprises at its end opposite to the hole one current conductor elastic means able to ensure the contact between the charging terminals and the bolt, and consequently the voltage transfer from the charging terminal to the bolt.

In another preferred embodiment, the port for placing bicycles further comprises at least one metal sensor which detects if on ends opposite to the bolts it is inserted a metallic object, such that only voltage is generated at the charging terminals if said sensor has detected metal. Thus, it is prevented the port for placing bicycles to establish a potential difference in the case of introducing conductive materials different than metal.

In a preferred embodiment of the port for placing bicycles, it further comprises a locking system that allows, once inserted a bolt in the element prepared to collect a bolt, to anchor said bolt to said port for placing bicycles.

In a preferred embodiment of said locking system, it comprises at least one rotatable lock shaft that can define at least two positions (open and closed). The rotatable lock shaft is essentially transverse to the axis of the elements prepared to collect bolts and at least one end is defined by at least one slot. If the rotatable lock shaft is in the open position, its slot is positioned such that allows the entrance and removal of the bolt. Conversely, if the rotary lock shaft is in the closed position, the slot is positioned such that the bolt removal is prevented, preferably being located at the top of the lower section of the bolt.

Preferably the rotatable lock shaft has at its two ends defined at least one slot and rotates through an engine or an engine and a gear adapted therefor. It should be noted here that this is a clear advantage over the document cited to in the prior art section, since in the invention two engines are not necessarily used to lock the electric bicycle to the port for placing bikes, but just one. This means that the invention is more robust and requires less maintenance than the port and the system protected in that document.

Preferably, the at least two positions defined by the movement of the rotatable lock shaft are 180° apart. That is, to change from one position to another is required the rotating lock shaft of the locking system to rotate 180°.

In a preferred embodiment, the port for placing bicycles only generates voltage in the charging terminal when the anchoring system is inserted into the port for placing bicycles and when the locking system has anchored the anchoring system to said port for placing bicycles.

It is also part of the invention an electric bicycle comprising at least one anchoring system according to the invention. Preferably, the electric bicycle of the invention comprises basic elements usual for such a vehicle - handlebar, frame, frontal wheel, rear wheel, electric motor and battery - and any embodiment of the anchoring system according to the invention, the electric motor is at the rear wheel and the battery is under the seat in a space prepared for it. Preferably, said space ready to collect the battery is also prepared to protect it from adverse weather conditions and vandalism.

It is also part of the invention a station for placing bicycles comprising at least one bicycle parking port according to the invention. Preferably, a station for placing bicycles according to the invention comprising, in addition to any embodiment of a port for placing bicycles according to the invention, at least one electrical cabinet comprising control electronics needed to control the existing electronics in at least one port for parking bicycles, as well as at least one voltage generator for at least said port and at least one device capable of detecting whether the placed electric bicycle can be anchored to the port for placing bicycles and/or parking at the station for placing bicycles and whether or not to recharge its electric battery.

In said cabinet there is at least one voltage line that is connected to at least one port for parking electric bicycles. Preferably, this connection is made via at least one switch device, preferably a relay, whose output is connected to the charging terminal of the elements of the port for parking electric bicycles.

In a preferred embodiment, said electric cabinet also comprises at least one data line, which it connected to at least one port for placing bicycles of the station for placing the bicycle. Through this data line required digital information is transmitted to said device capable to detect whether the placed bicycle can be anchored to the port for placing bicycles to determine, if the bicycle can be anchored to this port for placing bicycles and/or, it can parked in said station for electric bicycles and/or, if its battery can or should be recharged.

Preferably, the voltage and data lines are of very low voltage.

The switch device which allows the connection of the voltage line of the electric cabinet to at least one port for placing bicycles is normally in the open position, preventing the passage of current, and hence voltage, to the charging terminal and/or to the switch device of the port for parking bicycles. However, when an electric bicycle is parked at the station for placing bikes, introducing the anchoring system in the port for placing bicycles, the electronic devices ready for it, which can comprise said port along with the devices of the charging cabinet capable of detecting if the placed bicycle can be anchored to the port, determine if the electric bicycle can be anchored or placed in these ports for placing bicycles or station for placing bicycles, respectively. If so, and the port for placing bicycles is provided with the locking system, it anchors the anchoring system and therefore, the electric bicycle, to said port for placing bicycles.

If the port for placing bicycles is not provided with a locking system or if it is provided, if the electronic devices of the port for placing bicycles and/or the devices of the charging cabinet capable of detecting if the placed bicycle can be anchored to the port for placing bicycles determine that the battery of the electric bicycle must be recharged, said switch devices of the charging cabinet are closed, allowing the passage of voltage from said charging cabinet to said charging terminals of the elements prepared to collect a bolt and/or switch devices of the port for placing bicycles.

This station for placing bicycles according to the invention may comprise ports for parking electric bicycles and ports for parking bicycles other than electric bicycles, so that in said station can be parked bicycles of any kind.

### BRIEF DESCRIPTION OF THE DRAWINGS

The foregoing and other advantages and features will be more fully understood from the following detailed description of exemplary embodiments with reference to the accompanying drawings, to be considered as illustrative and not limitative, in which:
- Fig. 1 shows the anchoring system for electric bicycles according to the invention;
- Fig. 2 shows an electric bicycle according to the invention placed in a port for placing bicycle according to the invention;
- Fig. 3 represents a cross section of the port for placing bicycles according to the invention;
- Fig. 4 shows a view of the locking system of the lock for depositing bicycles according the invention in at least two positions that can be defined; and
- Fig. 5 shows an electric bicycle according to the invention.

### Detailed description of an example embodiment

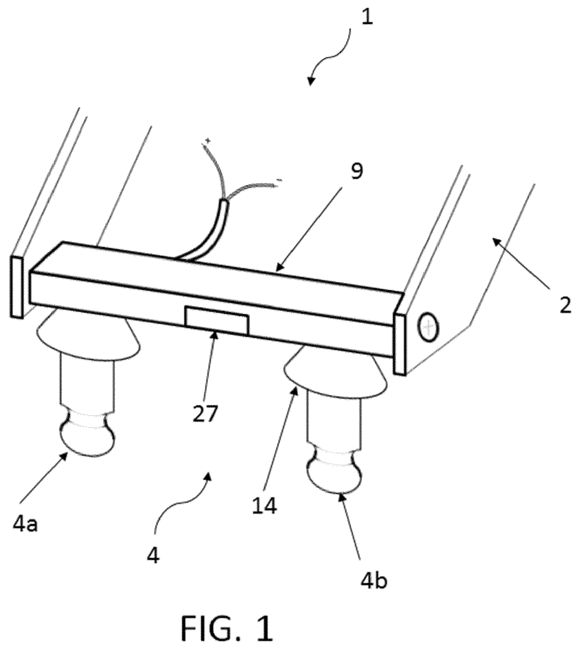

Fig. 1 shows an anchoring system (1) for an electric bicycle according to the invention for electric bicycles comprising at least one battery in which said anchoring system (1) comprises at least one support (2) ready for joining said anchoring system (1) to the electric bicycle (7), a bolt (4), preferably current conductor, and a device (9) from which wholly or partly projects said bolt (4).

Preferably, the support (2) is attached to the front of the electric bicycle (7), more specifically, to the frame (6) and/or its handlebar (5).

Preferably, said bolt (4) is made of metal.

Preferably, the device (9) is ready to swing and align said bolt (4) with the port for placing bicycles in which said bolt (4) is inserted.

Preferably, as depicted in Fig. 1, the anchoring system (1) according to the invention comprises a device (9) projecting from at least two bolts (4a, 4b).

In a preferred embodiment of the anchoring system (1), the support (2) is made of flexible material to difficult as much as possible the breakage of the joint of this support (2) with the front of the electric bicycle (7) if any user with the electric bicycle (7) anchored to the port for placing bicycles lifts said electric bicycle (7) by its rear portion and swings it to the ground.

Preferably, the bolt (4) consists of two distinct sections, all made of conductive material and preferably metal, of which the lower section has a spherical shape and may be solid or hollow, and the upper section, which also may be solid or hollow, having a shape of inverted cone or cylindrical.

In another preferred embodiment, the bolt (4) comprises at least three layers distributed coaxially from the innermost part to the outermost as: conductive layer, insulating layer and conductive layer.

At least one of the bolts (4) is connected to the battery of the electric bicycle (7) by means of electrical connectors so that the voltage generated by the port for placing bicycles (15) is transmitted to the battery.

In a preferred embodiment, this anchoring system (1) further comprises an electronic device prepared to allow the current passage from at least one bolt (4) to the battery terminal only when there is a need to recharge the battery of the electric bicycle (7) and to prevent the passage in the opposite direction of the current from the battery to said bolt (4). This way voltages in the bolt (4) are avoided. Preferably said device is a diode.

In another preferred embodiment, the anchoring system (1) further comprises an identifying device (27) that uniquely identifies the electric bicycle (7) to which said anchoring system (1) is joined.

In a preferred embodiment, the bolt (4) further comprises an umbrella device (14) prepared to prevent any liquid can contact the bolt (4) and enter the port for placing bicycles (15) once the anchoring system (1) has been inserted into the port for placing bicycles (15). Preferably, the umbrella device (14) has a frustoconical shape in which the part with smaller radius is located furthest from the lower section of the bolt.

In a preferred embodiment, the outer and/or internal surface of the umbrella device (14) is(are) coated with insulating material or it(they) is(are) made directly from insulating material.

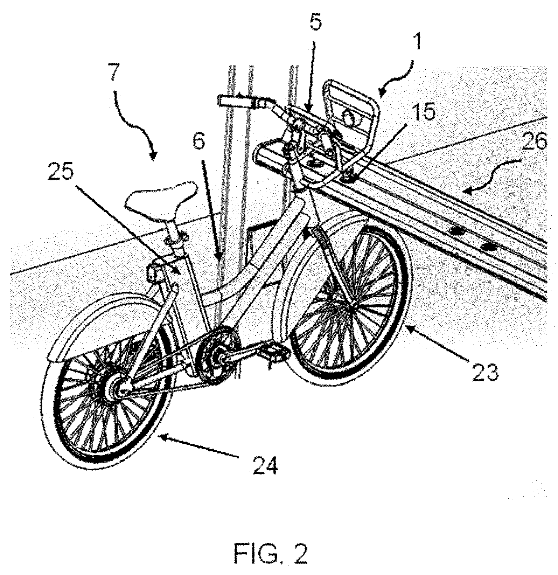

Fig. 2 shows an electric bicycle (7) comprising the anchoring system (1) according to the invention placed in a port for placing bicycle (15) according to the invention.

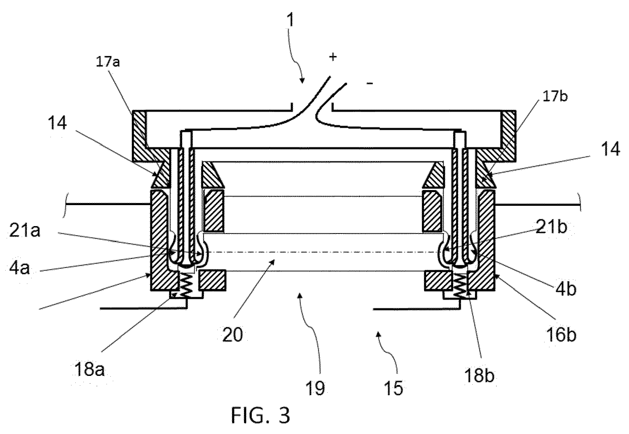

In Fig. 3 a cross-section of the port for placing bicycles (15) according to the invention is shown when the anchoring system (1) has been inserted.

This port for placing bicycles (15) according to the invention comprises at least one element (16), preferably cylindrically shaped, which communicates with the outside through a hole (17) prepared for at least one bolt (4) of the anchoring system (1) can be inserted. At the opposite end to the hole (17), the element (16) comprises at least one charging terminal (18), so that when a bolt (4) is inserted through the hole (17) and has contacted with this charging terminal (18), a voltage therein is established, that is transferred by contact to the bolt (4) and transmits it by electrical connectors to the battery, preferably to a terminal of said battery.

In a preferred embodiment, the positive pole of the battery is connected to a bolt (4) and the negative pole to the another bolt (4).

The element (16) can be blind or include at the end opposite to the hole (17) at least one small hole in case that water or other liquid is introduced, it can drained therethrough.

In a preferred embodiment, the outer and/or internal surface of the element (16) is coated with insulating material or it (they) is(are) made directly from insulating material.

In the case of the preferred embodiment of the bolt (4) formed by at least three layers distributed coaxially from its innermost part to the outermost, conductive layer, insulating layer and conductive layer, preferably, the element (16) comprises at least two charging terminals (18) such that when the bolt (4) is inserted through the hole (17), each conductive layer contacts each of the charging terminals (18) establishing a voltage difference in said bolt (4) that is transmitted through electrical connectors to the battery.

Preferably, the port for placing bicycles (15) comprises a pair of elements (16a, 16b) prepared to collect each part or all of a bolt (4a, 4b) comprising each at least one charging terminal (18a, 18b) so that when at least two bolts (4a, 4b) have been introduced, each, by the respective hole (17a, 17b) and contact the respective charging terminal (18a, 18b), a potential difference is set to said charging terminals (18a, 18b), which is transferred by contact to the respective bolts (4a, 4b) inserted in the element (16a, 16b), capable of recharging the battery of the electric bicycle (7).

In the preferred embodiment in which the bolt (4) comprises an umbrella device (14), the element (16) is dimensioned so that all of the bolt which is below the umbrella device (14) can be inserted, i.e. part of the upper section and the entire lower portion of the bolt (4). In this case, once the bolt (4) is introduced into the element (16) at least part of the umbrella device (14) covers the entire perimeter of the hole (17), so that any liquid or object cannot be inserted through it. This allows both bolts (4) and the charging terminals (18) are isolated, protecting them from, among several factors, any adverse weather conditions (rain, snow, etc.).

Preferably, as a safety measure, the port for placing bicycles (15) further comprises a switch device, for example a relay, which allows the passage of current to the charging terminal (18) only when the battery must be recharged.

In a preferred embodiment, the element (16) further comprises at its end opposite to the hole (17) current conductor elastic means able to ensure contact between the charging terminal (18) and the bolt (4) and consequently, the transfer of voltage applied to the charging terminal (18) to the bolt (4) and from it, via electrical connectors, to the battery terminal.

It should be noted that the port for placing bicycles (15) and the anchorage system (1) can be used in other configurations where the axis of the element (16) of the port for placing bicycles (15) is not perpendicular to the ground.

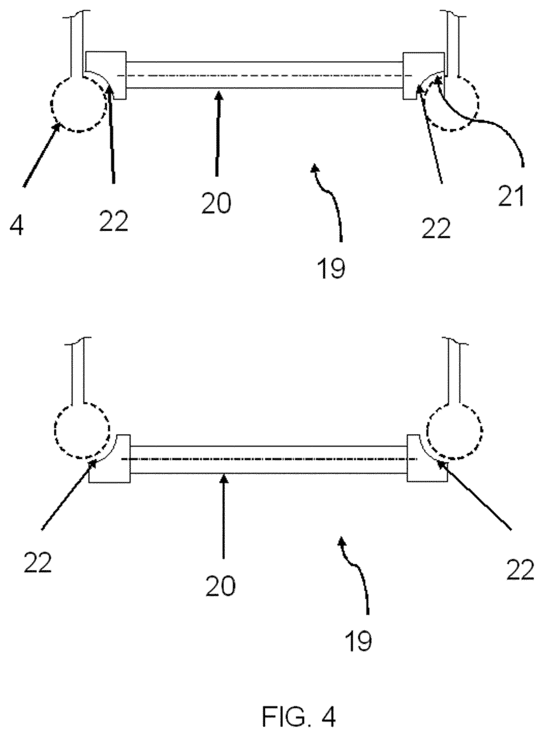

As can be seen in Fig. 4, the port for placing bicycles (15) further comprises a locking system (19) allowing, once introduced the bolt (4) in the element (16), to anchor it to the port to place bicycles (15).

To this end, in Fig. 4 a locking system (19) is shown, comprising at least one rotatable lock shaft (20) able to define at least two positions (open and closed) and which is transverse to the axis of the element (16). Specifically, in Fig. 4 the open position and the closed position are shown. In at least one end of said rotatable lock shaft (20) it is defined at least one slot (21) which is prepared for, in at least one position capable of defining the rotatable lock shaft (20), collecting part of the bottom of the lower section of the bolt (4) so as to allow the insertion and removal of the bolt (4) of the anchoring system of the electric bicycle (1), and in at least another of the positions capable to define the rotatable lock shaft (20), to abut with the top of the lower section of the bolt (4) in such a way as to prevent the insertion and removal of the bolt (4) of the anchoring system of the electric bicycle (1).

Accordingly, the rotatable lock shaft (20) is able to define at least two positions, one being the open position, in which the insertion and removal of the bolt (4) of the anchoring system of the bicycle electrical (1) inserted into the port for placing bicycles (15) is allowed, and another is that the closed position in which the insertion and removal of the bolt (4) of said anchoring system of the electric bicycle (1) is prevented.

In a preferred embodiment, the rotatable lock shaft (20) rotates mechanically from 0° to 180° (preferably using an engine or a engine and a gear, adapted therefor) such that in one of these positions the locking system (19) anchor the anchoring system of the bicycle (1) to the port for placing bicycles (15) and in the other position the locking system (19) does not anchor the anchoring system of the electric bicycle (1) to the port for placing bicycles (15). Specifically, when the locking system anchors the anchoring system of the bicycle (1) to the port for placing bicycles (15), the concave region (22) of the slot (21) is located so that abuts to the top of the lower section of the bolt (4) and when the locking system (19) does not anchor the anchoring system of the electric bicycle (1) to the port for placing bicycles (15), the concave area (22) of the slot (21) is positioned such that the bottom collects the lower section of the bolt (4) allowing the insertion and removal of the bolt (4).

In case the port for placing bicycles (15) comprises at least two elements (16a, 16b), the rotatable lock shaft (20) has at each of its ends defined by at least one slot (21 a, 21 b) such that the removal of each bolt (4a, 4b) inserted into each element (16a, 16b) is prevented when the locking system is in the closed position.

In a preferred embodiment, the port for placing bicycles (15) only generates voltage at the charging terminals (18) of the element (16) when it is inserted the respective bolt (4) of an anchoring system (1) of the electric bicycle in said element (16) and when the locking shaft (19) is in the closed position.

In case the electric battery is recharged through the voltage difference applied to two charging terminals (18a, 18b) of the corresponding elements (16a, 16b), said voltage only applies if the respective bolts (4a, 4b) have been inserted in said elements (16a, 16b) and the locking shaft (19) is in the closed position.

It should be noted that in a preferred embodiment, the port for placing bicycles (15) it further comprises an electronic control (at least one electronic device) capable of controlling the time which must generate the voltage applied to the charging terminal (18), preferably, activating the switch device of said port for placing bicycles (15) as well as activating the locking system (19) in the closed position.

The port for placing bicycles (15) further comprises at least one reader of the identifying device (27) of the anchorage system (1) and a metal sensor capable of detecting whether the electric bicycle (7) can be anchored to said port for placing bicycles (15), activating it in that case the locking system (19), and/or whether to recharge the battery of the electric bicycle (7), then applying voltage to the charging terminal (18). Thus, in the port for placing bicycles (15) it is prevented the establishment of voltage to the charging terminals (18) of the element (16) if different bicycles different to those univocally associated to said port for placing bicycles (15) or any other different element to electric bicycles (7) is placed.

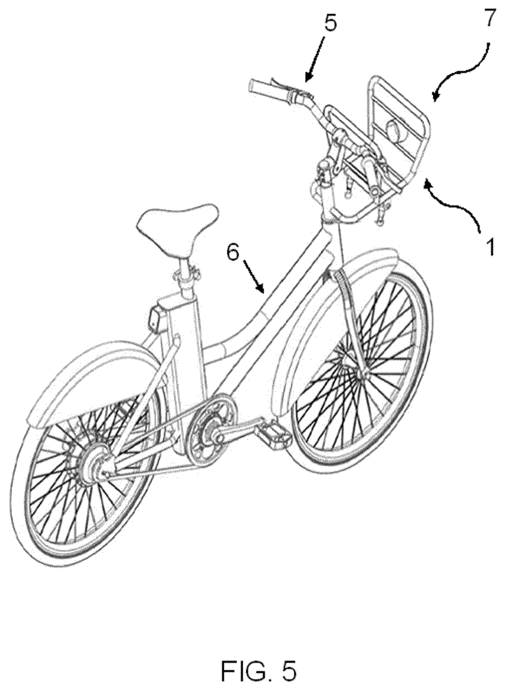

Both Fig. 2 and Fig. 5 show an electric bicycle (7) according to the invention comprising at least one handlebar (5), a frame (6), a frontal wheel (23), a rear wheel (24), an electric motor, a battery (not visible in these figures) and at least one anchor system of the electric bicycle (1) according to the invention. Preferably, the electric motor is located in the rear wheel and the battery under the seat in a space prepared for it (25).

In Fig. 2 it can be seen a portion of a station for placing bicycles (26) comprising at least one port for parking bicycles (15) according to the invention. Preferably, even though it is not represented in Fig. 2, the station for placing bicycle (26) further comprises at least one voltage line connected to port of parking bicycles (15), namely the charging terminal (18) for recharging the battery.

Preferably, the station for placing bicycles (26) and/or at least one of the ports for placing bicycles (15) comprising said station for placing bicycles (26) have defined a number of bicycles that can be anchored to them in such that the port for placing bicycles (15) only activates its locking system (19) if the reader of the identifying device (27) of the anchoring system (1) has identified the bicycle as one of those that can be anchored to the station for placing bicycles (26) and to said port for placing bicycles (15). In addition, if the bicycle is an electric bicycle (7) and its battery must be recharged, voltage is applied in that case to the charging terminal (18) of said port for placing bicycles (15) so that it can recharge the battery.

Preferably, the station for placing bicycles (26) further comprises a data line which connects the port for placing bicycles (15) through which required digital information is transmitted to the reader of the identifying device (27) of the anchoring system (1) to determine if the bicycle can be anchored to this port for placing bicycles (15) and/or if it is permitted to park in the station for placing bicycles (26) and/or if the battery can or should be charged and/or whether to release the bicycle to deliver it to any user.

## Claims

1. Anchoring system (1) for electric bicycles comprising at least one an electric battery, **characterized in that** it comprises at least one support (2) prepared for attaching said anchoring system (1) to the electric bicycle (7), a current conductor bolt (4, 4a, 4b) prepared to apply to it at least an electrical voltage and to be electrically connected to the battery of the electric bicycle (7), transmitting the voltage applied to the bolt (4, 4a, 4b) to the battery and a device (9), which projects totally or partially said bolt (4, 4a, 4b), and that is ready to swing and align said bolt (4, 4a, 4b) with a port for placing bicycles (15) according to claims 9 to 14 wherein said bolt (4, 4a, 4b) is inserted.

2. Anchoring system (1) for electric bicycles according to the previous claim, wherein the current conductor bolt (4, 4a, 4b) is prepared for applying electric voltage thereto by contact.

3. Anchoring system (1) for electric bicycles according to any previous claim, wherein the device (9) of said anchoring system (1) comprises at least two current conductor bolts (4a, 4b) prepared for applying thereto at least an electrical voltage and to electrically be connected with the battery of the electric bicycle (7), transmitting the voltage applied to the bolts (4a, 4b) to the battery, so that the voltage difference applied to the battery must be sufficient to recharge the battery.

4. Anchoring system (1) for electric bicycles according to any of the previous claims, further comprising an electronic device capable of preventing the passage of current from the electric battery to the bolt (4, 4a, 4b).

5. Anchoring system (1) for electric bicycles according to any of the previous claims, further comprising an umbrella device (14) prepared to cover the inlet hole (17, 17a, 17b) of the port for placing bicycles (15) in which this anchoring system (1) of electric bicycles is inserted.

6. Anchoring system (1) for electric bicycles according to the claim previous, wherein the external and/or internal surface of the umbrella device (14) is coated with insulating material or is made from insulating material.

7. Anchoring system (1) for electric bicycles according to any of claims 1 to 6, wherein the bolt (4, 4a, 4b) comprises at least three layers distributed coaxially from its innermost part to the outermost, conductive layer, insulating layer and conductive layer.

8. Anchoring system (1) for electric bicycles according to any of the previous claims, further comprising an identifying device (27) which identifies uniquely the electric bicycle (7) that is joined to said anchoring system (1).

9. Port for placing bicycles (15) comprising at least one element (16a, 16b) that communicates with the outside through a hole (17a, 17b) prepared to insert at least one bolt (4, 4a, 4b) of either anchoring system (1) for electric bicycles according to the previous claims and wherein the opposite end to said hole (17a, 17b) is ready to collect at least part of at least that bolt (4, 4a, 4b),
**characterized in that**
said end opposite to said hole (17a, 17b) comprises at least one charging terminal (18a, 18b) capable of transmitting voltage applied thereon to said bolt (4, 4a, 4b) and to the electric battery of the electric bicycle (7), so that the voltage difference applied to said battery is enough for to recharge it; and
said port for placing bicycles (15) further comprises at least one switch device that allows the passage of current to the charging terminal (18a, 18b) when the battery is recharged.

10. Port for placing bicycles (15) comprising at least one element (16a, 16b) that communicates with the outside through a hole (17a, 17b) prepared to insert at least one bolt (4, 4a, 4b) of the anchoring system (1) for electric bicycles according to claim 7 or claim 8 when is dependent on claim 7 and wherein the opposite end to said hole (17a, 17b) is ready to collect at least part of at least that bolt (4, 4a, 4b),
**characterized in that** the element (16a, 16b) comprises at least two charging terminals (18a, 18b) such that when the bolt (4, 4a, 4b) is inserted through the hole (17a, 17b), each conductive layer contacts one of the charging terminals (18a, 18b) establishing a voltage difference in said bolt (4, 4a, 4b) that is transmitted through electrical connectors to the battery.

11. Port for placing bicycles (15) according to any of claims 9 to 10, wherein the opposite end to the hole (17a, 17b) of the element (16a, 16b) further comprises a conductive elastic mean capable of ensuring the contact between the charging terminal (18a, 18b) and the bolt (4, 4a, 4b).

12. Port for placing bicycles (15) according to any of claims 9 to 11, further comprising a locking system (19) that allows, once inserted a bolt (4, 4a, 4b) in the element (16a, 16b), anchoring said bolt (4, 4a, 4b) to said port for placing bicycles (15) and wherein said locking system (19) comprises at least one rotatable lock shaft (20) capable of defining at least two positions such that in one position the insertion and removal of the bolt (4, 4a, 4b) from the anchoring system (1) for electric bicycles is prevented and in the other position the insertion and removal of the bolt (4, 4a, 4b) from the anchoring system (1) for electric bicycles is permitted.

13. Port for placing bicycles (15) according to the previous claim, wherein the rotatable lock shaft (20) comprises at least one slot (21) prepared so that when the rotatable lock shaft (20) is in the position that allows the insertion and removal of the bolt (4, 4a, 4b) from said anchoring system (1) for electric bicycles, the concave region of the slot (21) collects the bottom of the lower section of the bolt (4) and when the rotatable lock shaft (20) is in the position preventing the insertion and removal of the bolt (4, 4a, 4b) from said anchoring system (1) for electric bicycles, the concave region of the slot (21) is positioned such that abuts the top of the lower section of the bolt (4, 4a, 4b).

14. Port for placing bicycles (15) according to any of claims 9 to 13, further comprising at least one reader of the identifying device (27) of the anchoring system (1) according to claim 8 and a metal sensor capable of detecting whether the electric bicycle (7) can be anchored to said port for placing bicycles (15), activating it in that case the locking system (19) of said port for placing bicycles (15) and/or, if the battery of the electric bicycle (7) should be recharged, applying then voltage to the charging terminal (18a, 18b) of said port for placing bicycles (15).

15. Electric bicycle (7) comprising at least one handlebar (5), a frame (6), a frontal wheel (23), a rear wheel (24), an electric motor and a battery, **characterized in that** it further comprises at least any anchoring system (1) for electric bicycles according to any of claims 1 to 8.

16. Station for placing bicycles (26), **characterized in that** it comprises at least one port for placing bicycles (15) according to any of previous claims 9 to 14.
